# EUROPEAN PATENT APPLICATION

(11) **EP 3 974 816 A1**
(43) Date of publication of application: **30.03.2022**
(21) Application number: 21196327.7
(22) Date of filing: 13.09.2021
(51) Int. Cl.: G01N 21/88

(54) **INSPECTION APPARATUS, INSPECTION SYSTEM, INSPECTION METHOD, AND CARRIER MEANS**

(30) Priority: 28.09.2020 JP 2020162221
(71) Applicant: Ricoh Company, Ltd., Tokyo 143-8555 (JP)
(72) Inventor: KISHI, Hidenobu, Tokyo, 143-8555 (JP); HINO, Makoto, Tokyo, 143-8555 (JP)
(74) Representative: SSM Sandmair

(57) **Abstract**

An inspection apparatus (200) includes a projector (210) and an imaging device (260). The projector (210) irradiates an inspection target with light according to pattern image data associated with the inspection target, and the pattern image data specifies a pattern of light irradiation of the inspection target. The imaging device (260) captures an image of the inspection target being irradiated with the light from the projector (210) and outputs image data of the captured image.

## Description

### BACKGROUND

### Technical Field

Embodiments of the present disclosure relate to an inspection apparatus, an inspection system, an inspection method, and carrier means.

### Related Art

Conventionally, there is known an inspection apparatus that irradiates an inspection target with light, captures reflected light from a surface of the inspection target as image data, and detects an abnormality of the inspection target based on the image data (for example, Japanese Unexamined Patent Publication No. 2010-505122). In such an inspection apparatus, the inspection target is placed on a mount. The position of the mount and the position of a light source of the inspection apparatus are fixed in accordance with the type and shape of the inspection target so that the irradiation light is directed to the inspection target on the mount.

In the conventional inspection apparatus, it is necessary to adjust the position of the light source and the position of the mount every time the type or shape of the inspection target changes. In some cases, it is necessary to introduce a new inspection apparatus depending on the type or shape of the inspection target. For this reason, it is difficult to use the conventional inspection apparatus to inspect other inspection targets than a particular inspection target determined for each inspection apparatus. Thus, the conventional inspection apparatus has poor versatility.

### SUMMARY

In view of the foregoing, there is provided an inspection apparatus, an inspection system, and a method for inspecting an inspection target, as described in appended claims. Advantageous embodiments are defined by the dependent claims.

Advantageously, the inspection apparatus includes a projector and an imaging device. The projector irradiates an inspection target with light according to pattern image data associated with the inspection target, and the pattern image data specifies a pattern of light irradiation of the inspection target. The imaging device captures an image of the inspection target being irradiated with the light from the projector and outputs image data of the captured image.

Advantageously, the inspection system includes the above-described inspection apparatus and a management apparatus connected to the inspection apparatus to communicate with the inspection apparatus. The management apparatus includes a pattern image memory that stores the pattern image data, and transmits the pattern image data to the inspection apparatus.

Advantageously, the method includes irradiating the inspection target with light according to pattern image data associated with the inspection target, capturing an image of the inspection target being irradiated with the light, and outputting image data of the captured image. The pattern image data specifies a pattern of light irradiation of the inspection target. Accordingly, the versatility of the inspection apparatus improves.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an example of a configuration of an inspection system according to a first embodiment;
FIG. 2 is a perspective view illustrating an appearance of the inspection apparatus according to the first embodiment;
FIG. 3 is a perspective view illustrating a frame of the inspection apparatus illustrated in FIG. 2;
FIG. 4 is a cross-sectional view of the inspection apparatus along line A-A in FIG. 2;
FIGS. 5A to 5D is a diagrams illustrating pattern image data according to the first embodiment;
FIG. 6 is a cross-sectional view of an inspection apparatus according to a second embodiment;
FIG. 7 is a front view of an interior of a housing of the inspection apparatus illustrated in FIG. 6;
FIG. 8 is a side view of the interior of the housing illustrated in FIG. 7;
FIGS. 9A to 9C-3 are first diagrams illustrating operation of a management apparatus according to one embodiment of the present disclosure; and
FIGS. 10A to 10C-4 are second diagrams illustrating operation of the management apparatus according to one embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

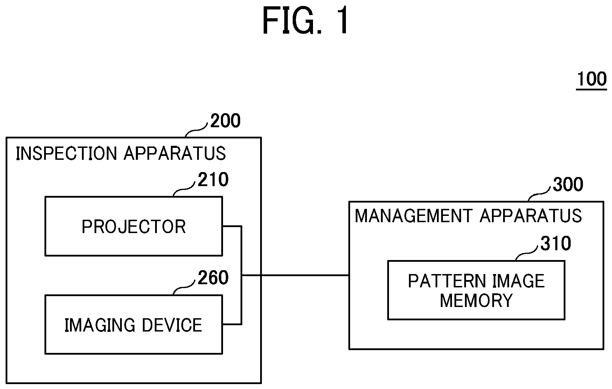

Descriptions are given of a first embodiment of the present disclosure with reference to the drawings. FIG. 1 is a block diagram illustrating an example of a configuration of an inspection system according to the first embodiment.

An inspection system 100 according to the present embodiment includes an inspection apparatus 200 and a management apparatus 300. In the inspection system 100, the inspection apparatus 200 and the management apparatus 300 are connected via a wired or wireless network to communicate with each other.

The inspection apparatus 200 according to the present embodiment includes a projector 210 and an imaging device 260. In the inspection apparatus 200, the projector 210 irradiates an inspection target with light according to pattern image data transmitted from the management apparatus 300. The imaging device 260 captures the reflected light from the inspection target as image data. The inspection apparatus 200 outputs (transmits) the captured image data to the management apparatus 300. The pattern image data according to the present embodiment is image data specifying the position at which the inspection target is irradiated with the light emitted from the projector 210. That is, the pattern image data specifies a pattern of light irradiation of the inspection target.

The management apparatus 300 may be, for example, a general information processing device including an arithmetic processor, a memory, and a communication interface. The management apparatus 300 includes a pattern image memory 310 that stores the pattern image data for each inspection target. The pattern image memory 310 may be a part of a storage device (storage area) included in the management apparatus 300, for example.

The pattern image memory 310 stores the pattern image data generated in advance for each inspection target. In other words, the pattern image memory 310 stores information for identifying an inspection target and pattern image data in association with each other.

In the present embodiment, for example, a plurality of pattern image data may be associated with one inspection target. In this case, when the inspection target is identified, the management apparatus 300 transmits, to the inspection apparatus 200, pattern image data corresponding to the inspection target.

In the present embodiment, as described above, the inspection apparatus 200 irradiates the inspection target with light according to the plurality of pattern image data, and captures the reflected light of he plurality of pattern image data. Thus, the position of the irradiation light on the inspection target can be easily changed.

Further, in the present embodiment, the pattern image memory 310 stores the pattern image data for each inspection target. This enables the inspection apparatus 200 to inspect the inspection target regardless of the type or shape of the inspection target.

In the present embodiment, when the pattern image data corresponding to the inspection target is not stored in the pattern image memory 310, the management apparatus 300 can generate the pattern image data corresponding to the inspection target, to enable the inspection.

In addition, the pattern image data associated with the inspection target may be determined as follows. For example, the pattern image data according to which an inspection target 250 is irradiated is sequentially switched among a plurality of pattern image data stored in the pattern image memory 310. Then, one of the plurality of pattern image data with which the imaging device 260 obtains most appropriate image data is determined as the pattern image data for the inspection target 250.

As described above, the present embodiment is advantageous in, for example, inspecting a small quantity of various kinds of inspection targets. By switching the pattern image data in accordance with the inspection target, the inspection apparatus 200 can inspect various kinds of inspection targets. Thus, the versatility of the inspection apparatus 200 improves.

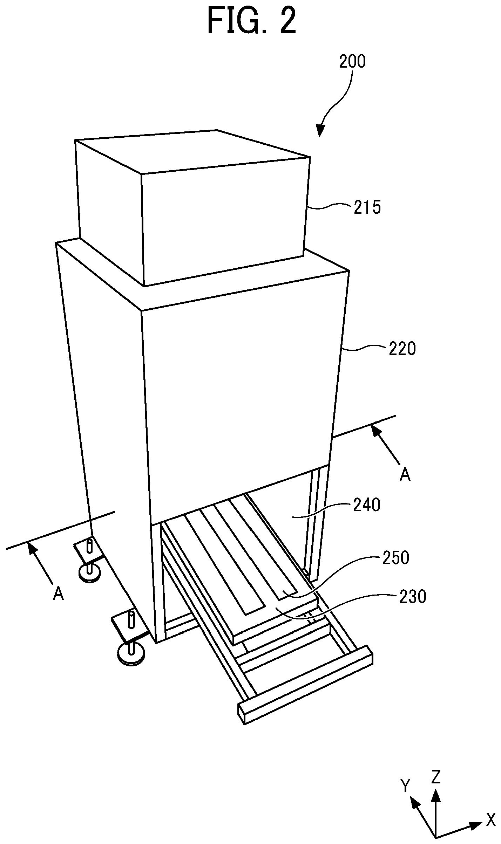

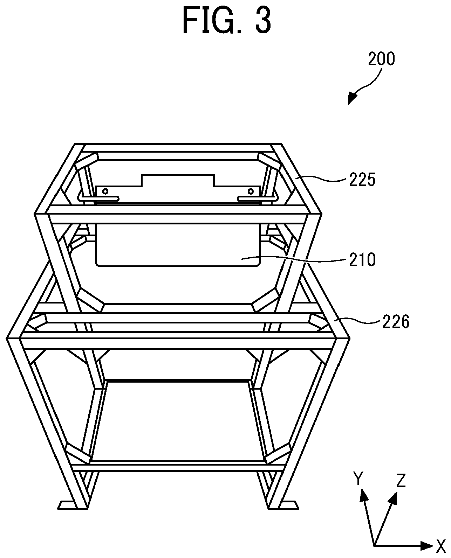

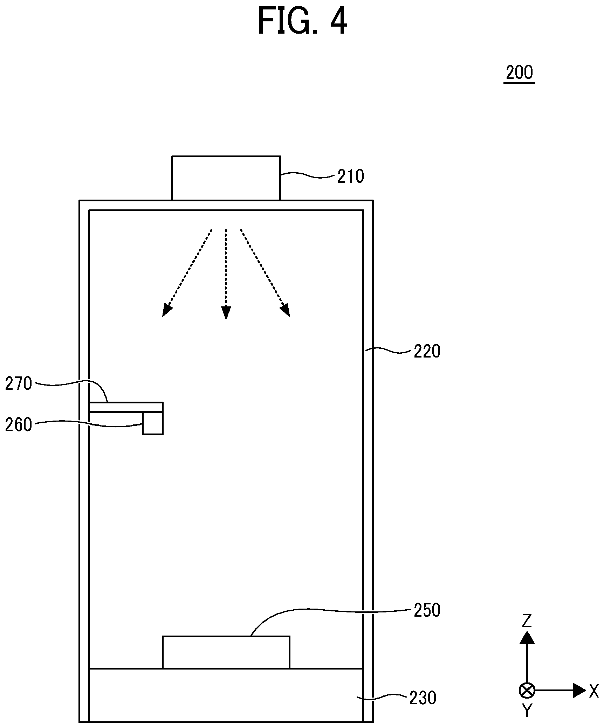

A description is given of the inspection apparatus 200 according to the present embodiment, with reference to FIGS. 2 to 4. FIG. 2 is a perspective view illustrating an appearance of the inspection apparatus 200. FIG. 3 is a perspective view illustrating a frame of the inspection apparatus 200. FIG. 4 is a cross-sectional view of the inspection apparatus 200 along line A-A in FIG. 2. In the following description, for the sake of convenience, a Z-axis direction in the drawings is defined as a vertical direction, a Y-axis direction in the drawings is defined as a front-rear direction, and an X-axis direction in the drawings is defined as a lateral direction.

The inspection apparatus 200 of the present embodiment includes the projector 210 (see FIG. 3), a cover 215, a housing 220, frames 225 and 226 (see FIG. 3), and a mount 230 (a jig).

The projector 210 is fixed to the frame 225 and covered with the cover 215. In this state, the projector 210 is fixed to the upper side of the housing 220. The projector 210 irradiates the inside of the housing 220 with light according to the pattern image data transmitted from the inspection apparatus 200.

The housing 220 is attached to the frame 226 so as to cover the periphery of the frame 226 and prevents the inspection target from being irradiated with external light. The inside of the housing 220 is black. In the present embodiment, the housing 220 enables the inspection apparatus 200 to perform inspection with high reproducibility without being affected by environmental changes depending on the installation location of the inspection apparatus 200.

The housing 220 has an opening 240 into which the mount 230 is inserted.

The mount 230 is manufactured in advance for each inspection target 250 in accordance with the type, the shape, and the like of the inspection target 250. The mount 230 on which the inspection target 250 is placed is inserted into the opening 240.

In the example illustrated in FIG. 2, the mount 230 is inserted into the opening 240, but the embodiments of the present disclosure are not limited thereto. In the inspection apparatus 200 according to the present embodiment, the opening 240 may have a tunnel shape so as to penetrate the housing 220 in the front-rear direction, and the inspection apparatus 200 may be installed so as to straddle a manufacturing line of the inspection target 250. Further, the mount 230 on which the inspection target 250 is placed may be slid in the front-rear direction.

The frame 225 is a member for securing the projector 210 and the cover 215. To the frame 226, a fixing member 270 to which the imaging device 260 is fixed is attached. The imaging device 260 is fixed to an end of the fixing member 270. Note that the fixing member 270 and the imaging device 260 are disposed not to block the light emitted to the inspection target 250 (workpiece).

The imaging device 260 captures an image of the inspection target being irradiated with the light from the projector 210, and transmits the captured image data to the management apparatus 300.

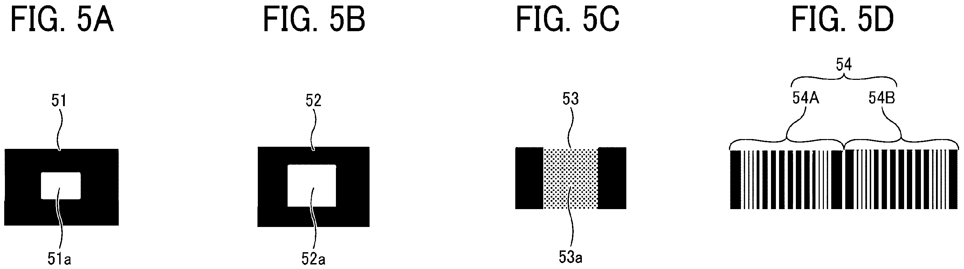

Next, a description is given of the pattern image data transmitted from the management apparatus 300 to the projector 210 according to the present embodiment, with reference to FIGS. 5A to 5D. FIGS. 5A to 5D is a diagram illustrating pattern image data according to the first embodiment.

FIGS. 5A to 5D illustrate pattern images 51, 52, 53, and 54 that are projection images obtained, respectively, by projecting the pattern image data stored in the pattern image memory 310 of the management apparatus 300.

The management apparatus 300 may generate the pattern image data stored in the pattern image memory 310 in advance, or acquire pattern image data from an external device. The pattern image data can be generated in any pattern by any method.

The pattern image 51 is a projection image obtained by projecting such pattern image data that a rectangular region 51a in a central area is irradiated with the light. When the inspection target 250 is irradiated with the light according to the pattern image data of the pattern image 51, only a portion of the inspection target 250 corresponding to the rectangular region 51a is irradiated with the light.

Therefore, for example, in a case where the upper surface of the inspection target 250 is larger than the rectangular region 51a and includes the rectangular region 51a, only a portion of the upper surface of the inspection target 250 corresponding to the rectangular region 51a is irradiated with the light.

The pattern image 52 in FIG. 5B is a projection image obtained by projecting such pattern image data that a rectangular region 52a wider than the rectangular region 51a in FIG. 5A is irradiated with the light. In a case where the inspection target 250 is irradiated with the light according to the pattern image data of the pattern image 52, similarly, when the upper surface of the inspection target 250 is larger than the rectangular region 52a and includes the rectangular region 52a, only the upper surface of the inspection target 250 is irradiated with the light.

In addition, for example, in a case where the upper surface of the inspection target 250 is smaller than the rectangular region 52a, the side face of the inspection target 250 is also irradiated with the light from the projector 210.

The pattern image 53 in FIG. 5C is a projection image obtained by projecting such pattern image data that the pattern image has color shading. The pattern image 53 includes a region 53a having a color lighter (a density lower) than that of another part of the pattern image 53. In the example illustrated in FIG. 5C, the pattern image 53 has black shading, but the color is not limited to black and may be any color expressed by RGB values.

When the pattern image 53 is projected onto the inspection target 250, a portion of the inspection target 250 corresponding to the region 53a is irradiated with light having a wavelength different from that of light with which other regions are irradiated.

The pattern image 54 in FIG. 5D is a projection image obtained by projecting such pattern image data that a region irradiated with the light alternates with a region not irradiated with the light. In other words, the pattern image 54 is a projection image obtained by projecting pattern image data representing a striped pattern including the regions irradiated with the light and the regions not irradiated with the light. The pattern image 54 includes a pattern image 54A and a pattern image 54B having different striped patterns.

Therefore, the region of the inspection target 250 irradiated with the light differs between the case where the inspection target 250 is irradiated with the pattern image data representing the pattern image 54A and the case where the inspection target 250 is irradiated with the pattern image data representing the pattern image 54B.

As described above, in the present embodiment, by causing the projector 210 to emit light according to the pattern image data specifying the light irradiation position, the light irradiation position on the inspection target 250, the wavelength of the light, and the like can be specified in advance.

In the present embodiment, the pattern image data can be generated by the management apparatus 300. Therefore, in the present embodiment, generating the pattern image data according to the type or the shape of the inspection target 250 enables the inspection system 100 to specify the light irradiation position, the wavelength of the light, or the like for each inspection target 250.

In other words, according to the present embodiment, the light irradiation position and the wavelength of the light are changed in accordance with the inspection target, and it is not necessary to adjust the position of the mount or the position of the light source for each inspection target. Thus, the versatility of the inspection apparatus improves.

A description is given of a second embodiment of the present disclosure with reference to the drawings. The second embodiment is different from the first embodiment in that the inspection apparatus includes a reflector that reflects light inside the housing and a diffuser that diffuses light, both disposed inside the housing of the inspection apparatus. Accordingly, in the description of the second embodiment below, different points from the first embodiment will be described. Components having substantially the same functions and configurations as those in the first embodiment are denoted by the same reference numerals as in the first embodiment, and redundant descriptions are omitted.

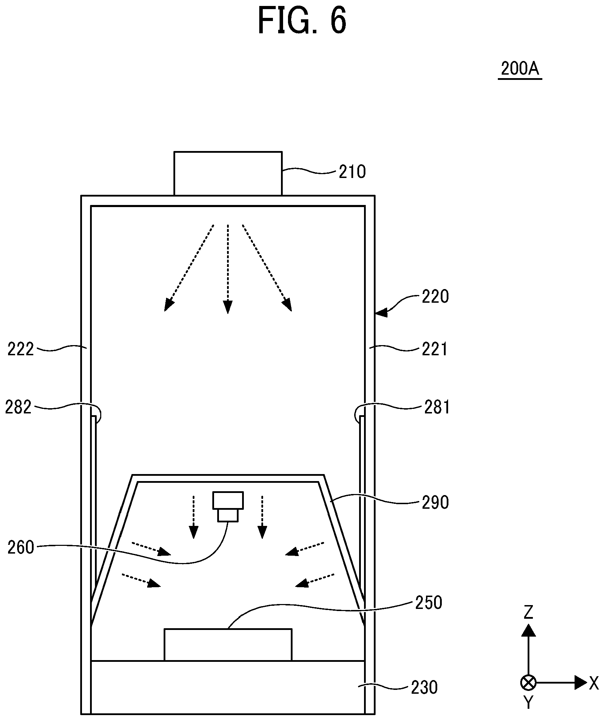

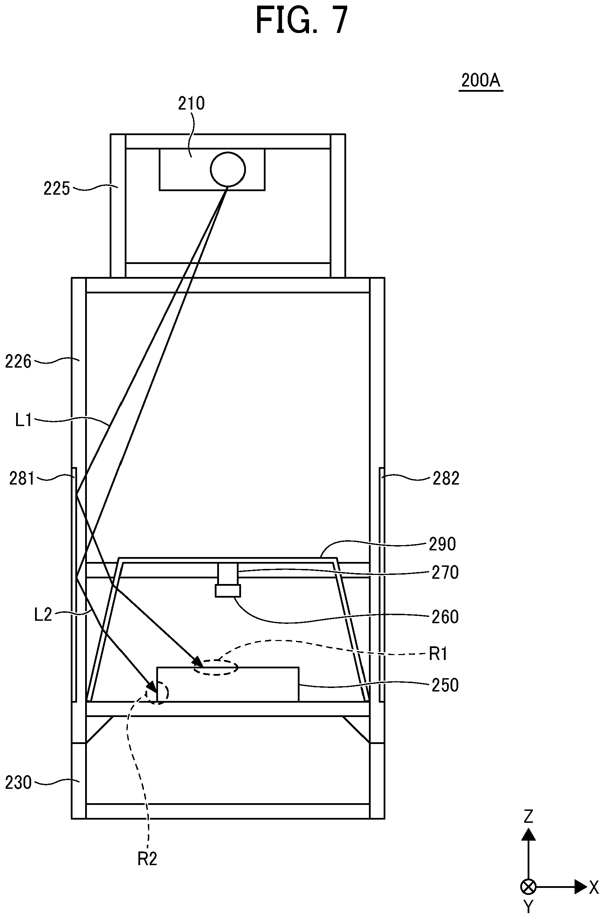

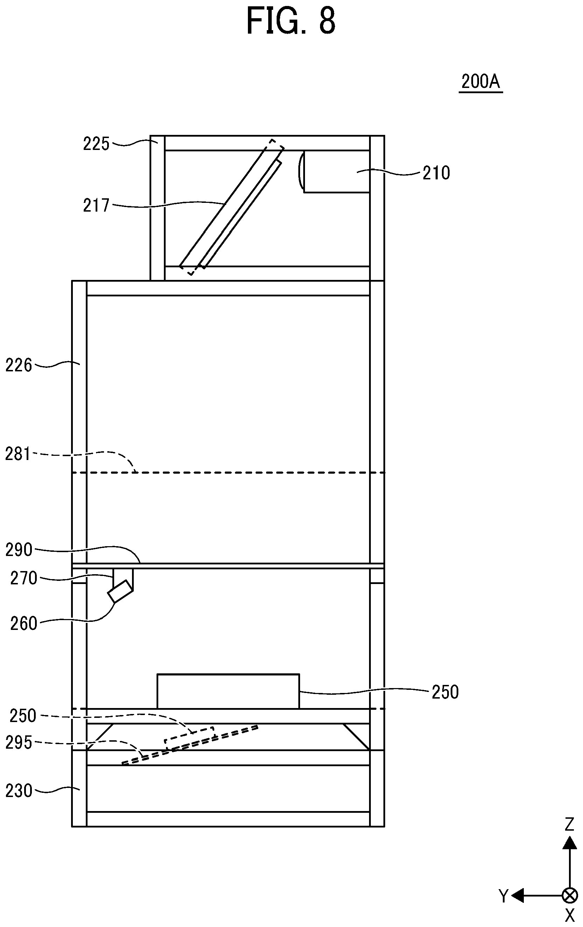

FIG. 6 is a cross-sectional view of an inspection apparatus 200A according to the second embodiment. FIG. 7 is a front view illustrating an interior of the housing 220 of the inspection apparatus 200A according to the second embodiment. FIG. 8 is a side view illustrating the interior of the housing 220 thereof.

The inspection apparatus 200A illustrated in FIG. 6 includes reflectors 281 and 282 disposed inside side walls 221 and 222 of the housing 220, respectively. The inspection apparatus 200A according to the present embodiment further includes a diffuser 290 that covers the mount 230.

Although the inspection apparatus 200A illustrated in FIG. 6 includes the housing 220 inside which the reflectors 281 and 282 and the diffuser 290 are disposed, the positions thereof are not limited thereto. As long as the reflectors 281 and 282 and the diffuser 290 are disposed so as to control the direction of light irradiation between the projector 210 (light source) and the inspection target 250, the positions thereof are not limited. In other words, in the present embodiment, the housing 220 is not a requisite of the inspection apparatus 200A, and the inspection may be performed in a dark room, a space shielded from external light, or the like.

The reflectors 281 and 282 are secured to the frame 226. In other words, the reflectors 281 and 282 are disposed on the inner faces of the side walls of the housing 220. The reflectors 281 and 282 reflect light emitted from the projector 210 toward the center side of the housing 220. The reflectors 281 and 282 according to the present embodiment may be attachable to and detachable from the frame 226.

The diffuser 290 is made of, for example, a milky white resin. The diffuser 290 diffuses the light emitted from the projector 210 to a region corresponding to the shape of the diffuser 290. The diffuser 290 may be made of translucent glass or the like.

In addition, the diffuser 290 prevents the projector 210 from being reflected in a captured image of the inspection target 250, for example, in a case where the surface of the inspection target 250 is mirror-finished. The diffuser 290 according to the present embodiment may be attachable to and detachable from the frame 226. In the present embodiment, the imaging device 260 is disposed below the diffuser 290. That is, the diffuser 290 is disposed so as to cover the inspection target 250 and the imaging device 260.

A description is given below of an optical path of light emitted from the projector 210 in a case where the reflector 281 and the diffuser 290 are provided, with reference to FIG. 7.

In FIG. 7, light L1 emitted from the projector 210 is reflected by the reflector 281 and enters the diffuser 290. Then, the light L1 is deflected by the diffuser 290 and directed to a region R1 of the upper surface of the inspection target 250 on the mount 230.

In FIG. 7, light L2 emitted from the projector 210 is reflected by the reflector 281 and enters the diffuser 290. Then, the light L2 is deflected by the diffuser 290 and is directed to a region R2 of the side surface of the inspection target 250 on the mount 230.

For example, it is assumed that the pattern image data at this time represents a projection image in which the region corresponding to the light L1 is red and the region corresponding to the light L2 is blue. In such a case, the region R1 of the inspection target 250 is irradiated with red light, and the region R2 is irradiated with blue light.

In another case where the pattern image data at this time represents a projection image in which the region corresponding to the light L1 is black and the region corresponding to the light L2 is white, the region R1 of the inspection target 250 is not irradiated with light, and the region R2 is irradiated with light.

In the present embodiment, the reflectors 281 and 282 and the diffuser 290 provided in this manner can irradiate the inspection target 250 with the light from different angles.

Further, in the present embodiment, by switching the pattern image data, the color and the angle of the light to the inspection target 250 and the light irradiation position can be changed.

In the present embodiment, the inspection apparatus 200A may further include a reflection plate 217 disposed, for example, as illustrated in FIG. 8. The reflection plate 217 reflects the light emitted from the projector 210 into the housing 220. As described above, for example, even when the diffuser 290 is not provided and the upper surface of the inspection target 250 is mirror-finished, the reflection plate 217 can prevent the projector 210 from being reflected in the image captured by the imaging device 260.

Further, as illustrated in FIG. 8, in the inspection apparatus 200A of the present embodiment, the mount 230 can be provided with a fixing member 295. The fixing member 295 secures the inspection target 250 at a position facing the imaging device 260. The fixing member 295 is, for example, attachable to and detachable from the mount 230, and may be attached to the mount 230 according to the size, shape, or the like of the inspection target 250.

In the present embodiment, as illustrated in FIG. 7, the diffuser 290 has a trapezoidal shape in the front view as an example. The shape of the diffuser 290 is not limited to that illustrated in FIG. 7. The diffuser 290 may have, for example, a hemispherical shape.

The inspection apparatus 200A according to the present embodiment includes the reflectors 281 and 282 and the diffuser 290, but the structure of the inspection apparatus 200A is not limited thereto. Alternatively, the inspection apparatus 200A includes, for example, either the reflectors 281 and 282 or the diffuser 290.

To be specific, the inspection apparatus 200A may include only the reflectors 281 and 282, or only the diffuser 290.

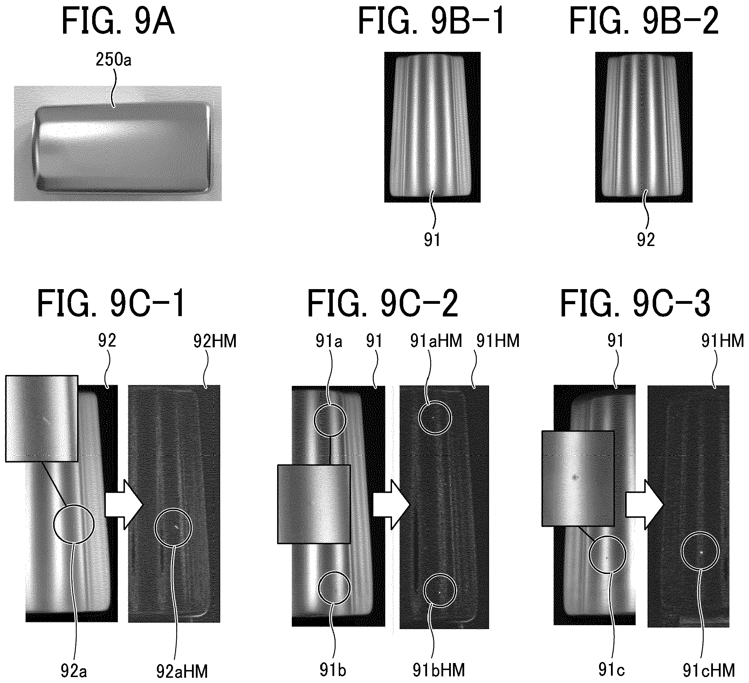

Next, a description is given below of operation performed by the management apparatus 300 according to the present embodiment, with reference to FIGS. 9A to 10C-4. FIGS. 9A to 9C-3 are first diagrams illustrating processing of the management apparatus 300. FIG. 9A illustrates an inspection target 250a. FIGS. 9B-1 and 9B-2 illustrate image data captured by the imaging device 260. FIGS. 9C-1 to 9C-3 illustrate results of determination of presence or absence of abnormality.

The management apparatus 300 determines the presence or absence of abnormality of the inspection target based on the image data transmitted from the imaging device 260 of the inspection apparatus 200.

The inspection target 250a illustrated in FIG. 9A is resin-plated part and has a gently projecting upper face. The inspection target 250a is mirror-finished.

In the example illustrated in FIGS. 9A to 9C-3, the inspection target 250a is associated with pattern image data that specifies irradiating the inspection target 250a with a striped pattern of light including irradiation regions and non-irradiation regions, from directly above the inspection target 250a. The inspection target 250 is further associated with pattern image data that specifies irradiating the inspection target 250a with the above-described striped pattern of light at an angle inclined with respect to the upper surface of the inspection target 250a.

Therefore, in the example illustrated in FIGS. 9A to 9C-3, two pattern image data are associated with the inspection target 250a. In the following description, the former pattern image data is referred to as first pattern image data, and the latter pattern image data is referred to as second pattern image data.

FIGS. 9B-1 and 9B-2 respectively illustrate an image 91 and an image 92 of the inspection target 250a captured by the imaging device 260. The image 91 is captured by the imaging device 260 from the inspection target 250a being irradiated according to the first pattern image data. The image 92 is captured by the imaging device 260 from the inspection target 250a being irradiated according to the second pattern image data.

Specifically, the first and second pattern image data in FIGS. 9B-1 and 9B-2 represent the pattern images 54A and 54B illustrated in FIG. 5D, respectively.

The management apparatus 300 according to the present embodiment acquires image data respectively representing the image 91 and the image 92 illustrated in FIGS. 9B-1 and 9B-2 from the inspection apparatus 200A, and determines whether there is an abnormality.

In FIG. 9C-1, a flaw was detected in a portion 92a in the image 92. In the example illustrated in FIGS. 9C-1, a heat map 92HM is generated from the image data representing the image 92, and a portion 92aHM corresponding to the portion 92a is presented on the heat map 92HM.

In FIG. 9C-2, protrusions are detected at portions 91a and 91b of the image 91. In the example illustrated in FIGS. 9C-2, a heat map 91HM is generated from the image data representing the image 91, and portions 91aHM and 91bHM corresponding to the portions 91a and 91b are presented on the heat map 91HM.

In FIG. 9C-3, a pit (welding defect) is detected in a portion 91c in the image 91. In the example illustrated in FIG. 9C-3, a portion 91cHM corresponding to the portion 91c is presented on the heat map 91HM.

In the present embodiment, as described above, the management apparatus 300 determines the presence or absence of an abnormality in the inspection target 250a based on a plurality of pattern images of the inspection target 250a, and the plurality of pattern images are obtained by irradiation of the inspection target 250a according to a plurality of pattern image data, respectively.

As a result, the protrusions and a pit are detected from the image 91, and the flaw is detected from the image 92. As described above, in the present embodiment, by irradiating one inspection target 250a according to a plurality of pattern image data, the accuracy of detecting an abnormality in the inspection target 250a improves.

The management apparatus 300 may determine the presence or absence of an abnormality based on, for example, a change in the continuity of pixel values in image data representing the images 91 and 92, respectively. The management apparatus 300 may store in advance the image data of the inspection target 250 having determined as being fee of abnormality. Then, the management apparatus 300 detects the presence or absence of abnormality by comparing the image acquired from the inspection apparatus 200A with the image stored in advance.

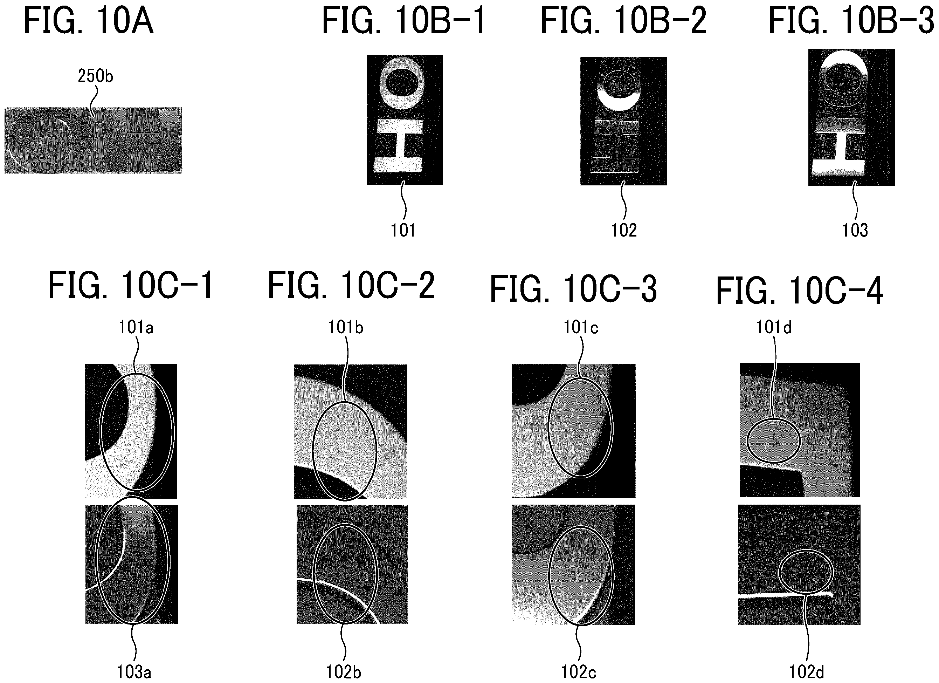

FIGS. 10A to 10C-4 are second diagrams illustrating the operation of the management apparatus 300. FIG. 10A illustrates an inspection target 250b. FIGS. 10B-1, 10B-2, and 10B-3 illustrate image data captured by the imaging device 260. FIGS. 10C-1, 10C-2, 10C-3, and 10C-4 illustrate results of determination of presence or absence of abnormality.

The inspection target 250b illustrated in FIG. 10A is a resin-plated plate having a mirror-finished upper face. The inspection target 250b is slightly curved and has fine streaks in the longitudinal direction thereof.

In the example illustrated in FIG. 10A, the inspection target 250b is associated with the pattern image data that specifies irradiating the upper face of the inspection target 250b with direct light from the projector 210.

The inspection target 250b is associated with pattern image data that specifies irradiating the inspection target 250b, from directly above, with a striped pattern of light including bright regions and dark regions, and another pattern image data that specifies irradiating the inspection target 250b with a striped pattern in which the bright regions and the dark regions are reversed.

In the example illustrated in 10A to 10C-4, the inspection target 250b is associated with three pattern image data. In the following description, pattern image data corresponding to an image 101 in FIG. 10B-1 is referred to as first pattern image data, pattern image data corresponding to an image 102 in FIG. 10B-2 is referred to as second pattern image data, and pattern image data corresponding to an image 103 in FIG. 10B-3 is referred to as third pattern image data.

The second pattern image data corresponding to FIG. 10B-2 is, for example, pattern image data representing the pattern image 53 in FIG. 5C. The third pattern image corresponding to FIG. 10B-3 is, for example, pattern image data representing an image in which the density of the region 53a of the pattern image 53 in FIG. 5C is increased and the densities of the regions on both sides of the region 53a are decreased.

FIGS. 10B-1, 10B-2, and 10B-3 respectively illustrate the image 101, the image 102, and the image 103 of the inspection target 250b captured by the imaging device 260. The image 101 is captured by the imaging device 260 from the inspection target 250b being irradiated according to the first pattern image data. The image 102 is captured by the imaging device 260 from the inspection target 250b being irradiated according to the second pattern image data. The image 103 is captured by the imaging device 260 from the inspection target 250b being irradiated according to the third pattern image data.

The management apparatus 300 according to the present embodiment acquires the image data representing the image 101, the image data representing the image 102, and the image data representing the image 103 from the inspection apparatus 200A, and determines whether there is an abnormality.

FIGS. 10C-1 to 10C-4 illustrate results of determination of the presence or absence of an abnormality based on image data respectively representing the image 101, the image 102, and the image 103. In FIG. 10C-1 to 10C-4, each of partial images 101a, 101b, 101c, and 101d is a part of the image 101. In FIG. 10C-1 to 10C-4, each of partial images 102b, 102c, and 102d is a part of an image 102, and a partial image 103a is a part of the image 103.

In FIG. 10C-1, cloudiness (white haze) of the inspection target 250b is detected in the partial image 103a of the image 103. By contrast, cloudiness is not detected in the partial image 101a of the image 101 at the position corresponding to the partial image 103a. In this case, the management apparatus 300 determines that there is an abnormality.

In FIG. 10C-2, a flaw on the surface of the inspection target 250b is detected in the partial image 102b of the image 102. By contrast, no flaw is detected in the partial image 101b of the image 101 corresponding to the partial image 102b. Also, in this case, the management apparatus 300 determines that there is an abnormality in the inspection target 250b.

In FIG. 10C-3, a flaw on the surface of the inspection target 250b is detected in the partial image 102c of the image 102. By contrast, no flaw is detected in the partial image 101c of the image 101 corresponding to the partial image 102c. Also, in this case, the management apparatus 300 determines that there is an abnormality in the inspection target 250b.

In FIG. 10C-4, a pinhole on the surface of the inspection target 250b is detected in the partial image 101d of the image 101. By contrast, no pinhole is detected in the partial image 102d of the image 102 at a position corresponding to the partial image 101d. Also, in this case, the management apparatus 300 determines that there is an abnormality in the inspection target 250b.

As described above, in the present embodiment, the management apparatus 300 determines that the inspection target 250b has an abnormality when determining that there is an abnormality in at least one of the plurality of image data respectively acquired by irradiation of the inspection target 250b according to the plurality of pattern image data.

In the present embodiment, as described above, use of a plurality of pattern image data enables detection of a local defect which is generally easily overlooked. Further, in the present embodiment, since a plurality of pattern image data is selectively used, local defects having different characteristics, such as white haze and pinholes, can be detected by a single inspection.

As described above, in the present embodiment, providing at least one of the reflectors 281 and 282 and the diffuser 290 increases variations of the angle of light with which the inspection target 250 is irradiated. In other words, in the present embodiment, providing at least one of the reflectors 281 and 282 and the diffuser 290 enables the inspection apparatus 200A to irradiate the inspection target 250 with light from various angles.

In addition, in the present embodiment, selective use of the pattern image data dedicated to each inspection target in irradiating the inspection target is advantageous in that the position of the irradiation light on the inspection target 250 and angle of the irradiation light to the inspection target 250 can be easily changed.

Therefore, according to the present embodiment, when the type or the shape of the inspection target is changed, the inspection can be performed only by switching the pattern image data. That is, the inspection apparatus 200A according to the present embodiment can inspect various types of inspection targets, and the versatility of the inspection apparatus improves.

In the above-described embodiment, the inspection apparatus includes a single projector, but the number of projectors is not limited to one. The inspection apparatus may include a plurality of projectors. In this case, an image based on the pattern image data may be projected into the space inside the housing using a plurality of projectors.

Aspects of the present disclosure are described based on the above-described embodiments, but the present disclosure are not limited to the elements of the above-described embodiments. The elements of the above-described embodiments can be modified without departing from the gist of the present disclosure, and can be appropriately determined according to the application form. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An inspection apparatus (200) comprising:
a projector (210) configured to irradiate an inspection target with light according to pattern image data associated with the inspection target, the pattern image data specifying a pattern of light irradiation of the inspection target; and
an imaging device (260) configured to capture an image of the inspection target being irradiated with the light from the projector (210) and output image data of the captured image.

2. The inspection apparatus (200) according to claim 1, further comprising a reflector (281; 282) configured to reflect the light from the projector (210) to the inspection target.

3. The inspection apparatus (200) according to claim 1 or 2, further comprising a diffuser (290) disposed to cover the inspection target and the imaging device (260),
wherein the diffuser (290) is configured to diffuse the light from the projector (210).

4. The inspection apparatus (200) according to claim 2, further comprising a housing (220) configured to cover the inspection target and the imaging device (260),
wherein the reflector (281; 282) is disposed on an inner face of a side wall (221; 222) of the housing (220), to reflect the light from the projector (210) to a center side of the housing (220).

5. The inspection apparatus (200) according to claim 3, further comprising a housing (220) configured to cover the inspection target and the imaging device (260),
wherein the diffuser (290) is disposed inside the housing (220), to cover the inspection target and the imaging device (260).

6. The inspection apparatus (200) according to claim 3 or 5,
wherein the diffuser (290) is translucent.

7. An inspection system comprising:
the inspection apparatus (200) according to any one of claims 1 to 6; and
a management apparatus (300) connected to the inspection apparatus (200) to communicate with the inspection apparatus (200), the management apparatus (300) including a pattern image memory (310) that stores the pattern image data,
wherein the management apparatus (300) transmits the pattern image data to the inspection apparatus (200).

8. A method for inspecting an inspection target, the method comprising:
irradiating the inspection target with light according to pattern image data associated with the inspection target, the pattern image data specifying a pattern of light irradiation of the inspection target;
capturing an image of the inspection target being irradiated with the light; and
outputting image data of the captured image.

9. Carrier means carrying computer readable codes for controlling a computer to carry out the method according to claim 8.
